# EUROPEAN PATENT APPLICATION

(11) **EP 4 675 782 A1**
(43) Date of publication of application: **07.01.2026**
(21) Application number: 24929411.7
(22) Date of filing: 11.12.2024
(51) Int. Cl.: H01M 50/169, H01M 50/559, B23K 26/21, H01M 10/04

(54) **BATTERY CELL AND METHOD FOR MANUFACTURING SAME**

(30) Priority: 16.05.2024 KR 20240063787; 20.11.2024 KR 20240166449
(71) Applicant: LG ENERGY SOLUTION, LTD., Seoul 07335 (KR)
(72) Inventor: KO, Kwang-Hun, Daejeon 34122 (KR); KIM, Geon-Guk, Daejeon 34122 (KR); LEE, Seung-Hun, Daejeon 34122 (KR); JO, Min-Ki, Daejeon 34122 (KR); CHO, Sung-Min, Daejeon 34122 (KR); HONG, Tae-Rim, Daejeon 34122 (KR); HWANG, Dong-Sung, Daejeon 34122 (KR)
(74) Representative: Goddar, Heinz J.
(86) International application number: PCT/KR2024/020261
(87) International publication number: WO 2025/239488

(57) **Abstract**

Disclosed are a battery cell and a method for manufacturing the same. A battery cell according to an embodiment of the present disclosure includes an electrode assembly including a first electrode, a second electrode, and a separator; a can having an open part formed therein and accommodating the electrode assembly; a current collector plate connected to the electrode assembly; and a cap covering the open part of the can, wherein the cap is bonded at an outer side of the can.

## Description

### TECHNICAL FIELD

This application is based on and claims priority from Korean Patent Application No. 10-2024-0063787, filed on May 16, 2024 and No. 10-2024-0166449, filed on November 20, 2024, with the Korean Intellectual Property Office, the disclosure of which is incorporated herein in its entirety by reference.

The present disclosure relates to a battery cell and a method for manufacturing the same.

### BACKGROUND ART

The process of manufacturing a battery cell utilizing a cylindrical can includes the steps of deep drawing a metal sheet to form a circular bottom member and a circular tubular side wall member connected thereto, accommodating an electrode assembly therein, injecting an electrolyte into the can, and covering an open part of the side wall member with a cap to be closed.

In a conventional method for fixing the cap to the side wall member, the side wall member is beaded, the end of the side wall member is crimped, and the edge of the cap is axially compressed and fixed between the beading portion and the crimping portion.

However, the above cap fixing method has limitations in increasing the energy density of the battery cell because the structures required for fixing the cap occupy the internal space of the battery cell.

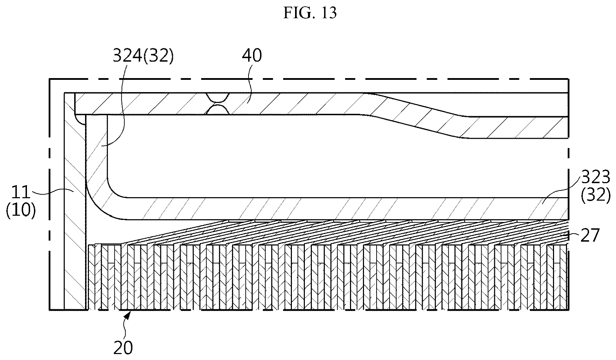

Accordingly, as shown in FIG. 13, an improvement plan has been proposed in which the structure for fixing the cap occupies the minimum internal space of the battery cell by welding the edge of the cap 40 to the end of the side wall member 11 positioned at the open part of the can 10.

However, in the above cap fixing method, some of the electrolyte is smeared on the end of the side wall member of the can, that is, the part to be welded, in the process of injecting the electrolyte into the can. If the part where the electrolyte is smeared is welded, there is a concern about fire.

In preparation for this possibility of fire, an additional cleaning process on the part to be welded after injection of the electrolyte was performed, and the cap and the can were welded. However, there were problems that this required an additional process and the cleaning process alone was not enough to prevent fire.

Accordingly, an additional process was performed in which the cap was first welded to the can without injecting the electrolyte, and then the electrolyte was injected through the injection port and the injection port was blocked.

However, compared to the method in which the electrolyte is first injected before installing the cap, this method has problems that the injection process is not carried out smoothly and an additional process of blocking the injection port is required.

Meanwhile, a current collector plate 32 that contacts and is electrically connected to the electrode tabs of the electrode assembly is provided at the open end of the can of both axial ends of the electrode assembly 20 accommodated in the can. The terminal connection portion 324 of the current collector plate is connected to the cap or the side wall member by welding or the like so as to contact and be electrically connected to the cap or the side wall member. In particular, for the welding process, the terminal connection portion of the current collector plate should remain in close contact with the cap or the side wall member.

However, due to dimensional or shape deviations that occur during the manufacturing process of the current collector plate, and assembly errors of the electrode assembly and the current collector plate, it was difficult to maintain the current collector plate in close contact with the cap or the side wall member.

Accordingly, in this process of welding the current collector plate, a pressing jig facility is additionally required to press the current collector plate against the part to be welded. The pressing jig facility includes a jig for pressing the current collector plate against the cap or the current collector plate against the side wall member, and a mask for exposing the part to be welded.

In order to press the current collector plate against the cap or the side wall member through the mask or jig, a space for accommodating the mask or jig should be provided inside the can. However, this space remains as an empty space after the mask or jig is removed, resulting in a problem that the internal volume of the can cannot be efficiently utilized. This is a factor that hinders the design of increasing the energy density per unit volume of the can.

In addition, when welding the can and the cap, seam welding is performed to secure sealing, which generates a lot of welding heat. If the welding heat generated at this time is transferred to the electrode assembly accommodated inside the can, there is a concern that the separator may deteriorate and the internal structure may be deformed or decomposed. Therefore, it is necessary to prevent this welding heat from being transferred to the electrode assembly.

Meanwhile, in the crimping fixing structure described above, the beading portion functions as a support for axially supporting the electrode assembly accommodated inside the can, but in the structure of fixing the cap to the can by welding, there is no structure for axially supporting the electrode assembly accommodated inside the can, resulting in a problem that the support force for the electrode assembly is weak.

### DISCLOSURE

### Technical Problem

The present disclosure is designed to solve the above-described problems, and therefore the present disclosure is directed to providing a battery cell and a method for manufacturing the same capable of designing to increase the energy density per unit volume of a can without wasting the internal space of the can.

The present disclosure is directed to providing a battery cell and a method for manufacturing the same that are free from concerns about fire due to the electrolyte when a cap is welded to the can after injection of the electrolyte.

The present disclosure is directed to providing a battery cell and a method for manufacturing the same in which the electrolyte may be injected first before covering the can with the cap to smoothly perform the electrolyte injection process.

The present disclosure is directed to providing a battery cell and a method for manufacturing the same that require less assembly man-hour by eliminating the need for a separate injection port.

The present disclosure is directed to providing a battery cell and a method for manufacturing the same that may first inject the electrolyte and then weld the cap to the can without a separate cleaning process.

The present disclosure is directed to providing a battery cell and a method for manufacturing the same in which the current collector plate and the can may be easy to be in close contact with each other even if a manufacturing error of the current collector plate or an assembly error of the electrode assembly occurs.

The present disclosure is directed to providing a battery cell and a method for manufacturing the same capable of preventing damage to the electrode assembly inside the can due to heat generated when welding the can and the cap.

The present disclosure is directed to providing a battery cell and a method for manufacturing the same capable of securing axial support for the electrode assembly accommodated in the can.

Technical problems of the present disclosure are not limited to the above-described objects, and other objects and advantages not mentioned herein may be understood from the following description, and will be more clearly understood from the embodiments of the present disclosure. Additionally, it will be easily understood that the objects and advantages of the present disclosure may be realized by the means and combinations thereof set forth in the claims.

### Technical Solution

The present disclosure for solving the above-described problem may be applied to a battery cell including a can, an electrode assembly accommodated in an internal space of the can, a current collector plate electrically connecting electrodes of the electrode assembly and the can, and a cap sealing an open part of the can to be closed.

The can includes a bottom member and a side wall member.

The side wall member extends in an axial direction, and a first end thereof in the axial direction is connected to the bottom member, and a second end thereof in the axial direction opposite to the first end is open.

The bottom member and the side wall member define the internal space of the can.

The electrode assembly is accommodated in the internal space.

The current collector plate includes an electrode connection portion connected to the electrodes of the electrode assembly and a terminal connection portion connected to the side wall member.

The cap includes a cover portion covering the open part of the second end and a skirt portion extending in the axial direction from an edge of the cover portion.

A diameter reduction portion in which both a first outer diameter and a first inner diameter of the side wall member are reduced is provided in the second end.

The skirt portion is disposed on a radial outer side of the diameter reduction portion.

The skirt portion and the diameter reduction portion are bonded.

The skirt portion and the diameter reduction portion may be bonded by welding.

The welding may be performed by a laser irradiated from a radial outer side of the can toward a radial inner side.

The welding part is a part where the electrolyte is difficult to reach during the process of injecting the electrolyte into the internal space of the can.

In the axial direction, at least a portion of an inner circumferential surface of the skirt portion may be in close contact with at least a portion of an outer circumferential surface of the diameter reduction portion.

Since the skirt portion extends in the axial direction, the contact area of the diameter reduction portion and the skirt portion may be sufficiently secured.

Preferably, an axial inner end of the inner circumferential surface of the skirt portion may be bonded to the outer circumferential surface of the diameter reduction portion.

Then, the welding part is not exposed radially further outward than the side wall member and is not exposed axially further outward than the cover portion of the cap.

The skirt portion may be disposed within the section occupied by the diameter reduction portion in the axial direction. Accordingly, the skirt portion may prevent the outer diameter of the battery cell from increasing.

The terminal connection portion may extend axially from a radial outer edge of the current collector plate.

Since the terminal connection portion extends in the axial direction, the contact area of the terminal connection portion and the side wall member may be sufficiently secured.

The terminal connection portion may extend axially outward from a bending portion provided on the radial outer edge of the current collector plate.

The terminal connection portion and the diameter reduction portion may be bonded.

The terminal connection portion and the diameter reduction portion may be bonded by welding.

The welding may be performed by a laser irradiated from an axial outer side of the can toward an axial inner side.

In the axial direction, at least a portion of an inner circumferential surface of the diameter reduction portion may be in close contact with at least a portion of an outer circumferential surface of the terminal connection portion.

Preferably, an axial outer end of the outer circumferential surface of the terminal connection portion may be bonded to an axial outer end of the inner circumferential surface of the diameter reduction portion.

Preferably, the terminal connection portion may be in close contact with the diameter reduction portion in the entire circumferential direction.

The diameter reduction portion may include a decreasing section whose diameter gradually decreases toward an axial outer side, and a reduction section disposed on the axial outer side of the decreasing section and having a constant diameter.

An axial inner end of the diameter reduction portion may be disposed further outward than an axial outer end of an outer circumferential surface of the electrode assembly.

In the axial direction, a second inner diameter of at least a portion of the diameter reduction portion may be smaller than an outer diameter of the electrode assembly.

Accordingly, the diameter reduction portion may support the electrode assembly accommodated inside the can in the axial direction.

An outer diameter of the skirt portion may substantially correspond to a first outer diameter of the side wall member.

The skirt portion may cover some or all of the reduction section in the axial direction.

The present disclosure further provides a method for manufacturing the battery cell described above.

The manufacturing method includes a step of forming the diameter reduction portion by swaging a second end of the side wall member of the can accommodating the electrode assembly radially inward.

At this time, the adhesion between the inner circumferential surface of the diameter reduction portion and the outer circumferential surface of the terminal connection portion may be adjusted by adjusting the degree of processing of the swaging.

The manufacturing method may further include a step of bonding the diameter reduction portion and the terminal connection portion.

The manufacturing method includes a step of injecting an electrolyte into the can through an open part of the can.

The electrolyte injection may be performed after bonding the diameter reduction portion and the terminal connection portion.

The manufacturing method includes a step of covering the open part of the can with the cap so that the skirt portion is disposed radially outward from the diameter reduction portion after injecting the electrolyte.

The manufacturing method includes a step of bonding the skirt portion and the diameter reduction portion.

After the diameter reduction portion is formed and before the electrolyte is injected, a heterogeneous electrode of the electrode assembly having a different polarity from the electrode may be connected to the electrode terminal.

Accordingly, the diameter reduction portion and the terminal connection portion may be concentrically aligned during the swaging process.

The bottom member may have a flat plate circular shape, and the side wall member may have a circular tubular shape. The can may be formed by deep drawing a metal sheet plated with nickel (Ni) on both surfaces of steel.

The electrode assembly may be manufactured in the form of a jelly-roll in which a first electrode, a separator, a second electrode, and a separator are sequentially stacked and wound around a core axis.

The electrode assembly may have a cylindrical shape.

The cap may be manufactured by processing a circular plate made of metal.

A first current collector plate connected to a first electrode of the electrode assembly may be installed at a first end of the electrode assembly in the axial direction.

The first current collector plate may be connected to a first electrode terminal.

The first electrode terminal may be installed on the bottom member of the can.

The first electrode terminal may be electrically insulated from the bottom member and may be sealed and fixed to the bottom member.

A second current collector plate connected to a second electrode of the electrode assembly may be installed at a second end of the electrode assembly in the axial direction.

The second current collector plate may be disposed at the open part of the can.

The electrode connection portion of the second current collector plate may extend radially.

The terminal connection portion may be disposed radially further outward than the electrode connection portion.

The terminal connection portion and the electrode connection portion may be connected through a bending portion provided at a lower end of the terminal connection portion and diverting the extension direction of the current collector plate.

An inner diameter of the axial second end of the side wall member in which the diameter reduction portion is provided may correspond to or be larger than an outer diameter of the axial outer end of the terminal connection portion.

The side wall member does not cover the front end surface in the axial direction.

Accordingly, the laser irradiated in the axial direction may directly reach the diameter reduction portion and the terminal connection portion.

The axial positions of the axial outer end of the diameter reduction portion and the axial outer end of the terminal connection portion may correspond to each other.

The axial outer end of the diameter reduction portion and the axial outer end of the terminal connection portion may be in contact with the cap. Accordingly, the axial coupling depth of the cap to the can may be regulated.

The can and the cap may constitute a second electrode terminal.

The battery cell may be assembled after preparing a can fixing the first electrode terminal and an electrode assembly connecting the first current collector plate and the second current collector plate.

After accommodating the electrode assembly in the can so that the first current collector plate faces the bottom member, the axial second end of the side wall member of the can may be swaged to allow the diameter reduction portion and the terminal connection portion of the second current collector plate to be in close contact with each other in the radial direction.

Next, the first current collector plate and the first electrode terminal may be welded, and the axial outer ends of the diameter reduction portion and the terminal connection portion may be welded.

Next, an electrolyte may be injected into the can.

Next, without a separate cleaning process, the open part of the can may be covered with the cap, and the skirt portion and the outer circumference of the diameter reduction portion may be welded.

### Advantageous Effects

According to the present disclosure, the skirt portion of the cap is welded to the outer circumferential surface of the diameter reduction portion of the can, so that there is no concern about fire due to the electrolyte when the cap is welded to the can after injection of the electrolyte.

According to the present disclosure, the skirt portion of the cap is welded to the outer circumferential surface of the diameter reduction portion of the can, so that the electrolyte may be injected first before covering the can with the cap, which may smoothly perform the electrolyte injection process, and manufacturing man-hour may be reduced by eliminating the need for a separate cleaning process for the part to be welded.

According to the present disclosure, the electrolyte is injected first before covering the can with the cap, so that assembly man-hour may be reduced by eliminating the need for a separate injection port.

According to the present disclosure, the diameter of the open end of the side wall member is reduced through swaging processing and brought into close contact with the current collector plate, so that the current collector plate may be concentrically aligned with the can, and even if there is a manufacturing error of the current collector plate or an assembly error of the electrode assembly, the current collector plate and the can may be easy to be in close contact with each other.

According to the present disclosure, the welding part formed at the axial ends of the side wall member and the current collector plate may be protected by covering it with the cap at the outer side in the axial direction.

According to the present disclosure, the skirt portion of the cap is in contact with the outer circumferential surface of the diameter reduction portion of the side wall member in the radial direction, so that the contact area of the cap and the can may be secured, and the skirt portion may prevent the size of the battery cell from increasing.

According to the present disclosure, the welding part is formed on the front end of the skirt portion and the outer circumferential surface of the diameter reduction portion, so that the welding part is not exposed to the axial end and the radial end to be protected.

According to the present disclosure, the current collector plate is in close contact with the inner circumferential surface of the diameter reduction portion of the side wall member, so that the welding heat of the skirt portion of the cap and the outer circumferential surface of the diameter reduction portion may be quickly dispersed through the current collector plate having high thermal conductivity, thereby preventing the high temperature heat from damaging the electrode assembly inside the can.

According to the present disclosure, the diameter reduction portion formed on the side wall member through swaging processing may axially support the electrode assembly accommodated in the can.

Along with the above-described effects, the specific effects of the present disclosure will be described together while describing specific matters for carrying out the disclosure below.

### DESCRIPTION OF DRAWINGS

FIG. 1 is a perspective view showing an embodiment of a cylindrical battery cell.
FIG. 2 is an exploded perspective view of an electrode assembly accommodated inside the can of FIG. 1 before winding.
FIG. 3 is a perspective view of the electrode assembly of FIG. 2 in a stacked state before winding.
FIG. 4 is a perspective view showing a state in which an electrode assembly in the form of a cylindrical jelly-roll is assembled by winding the stack of FIG. 3.
FIG. 5 is a perspective view showing a state in which a first current collector plate is bonded to an electrode tab of a first electrode of the electrode assembly.
FIG. 6 is a perspective view showing a state in which a second current collector plate is bonded to an electrode tab of a second electrode of the electrode assembly.
FIG. 7 is a side cross-sectional view showing the process of accommodating the electrode assembly to which the current collector plate is bonded inside the can.
FIG. 8 is a side cross-sectional view showing the process of bonding the first current collector plate and the first electrode terminal of the electrode assembly accommodated in the can.
FIG. 9 is side cross-sectional view showing a state in which a diameter reduction portion is formed by swaging an end of a side wall member.
FIG. 10 is an enlarged side cross-sectional view showing the process of welding the current collector plate and the side wall member.
FIG. 11 is a side cross-sectional view showing the process of covering an open end of the can accommodating the electrode assembly with the cap.
FIG. 12 is an enlarged side cross-sectional view showing the process of welding a skirt portion of the cap and the side wall member.
FIG. 13 is a view showing the coupling structure of a can and a current collector plate of a battery cell of a comparative example.
FIG. 14 is a view showing a modified embodiment of FIG. 12.
FIG. 15 is a flowchart of a battery cell manufacturing process according to the present disclosure.
FIGS. 16 and 17 show a battery pack to which a battery cell of the embodiment is applied, and a vehicle on which such a battery pack is mounted.

### BEST MODE

The above-described objects, features, and advantages will be described in detail later with reference to the accompanying drawings, which will enable those having ordinary skill in the technical field pertaining to the present disclosure to easily carry out the technical ideas of the present disclosure. When it is judged that a detailed description of a known technology related to the present disclosure may unnecessarily obscure the gist of the present disclosure in describing the present disclosure, such a detailed description thereof will be omitted. Hereinafter, a preferred embodiment according to the present disclosure will be described in detail with reference to the accompanying drawings. In the drawings, the same reference numerals are used to indicate the same or similar components.

Although the first, second, and the like are used to describe various components, it is obvious that these components are not limited by these terms. These terms are used only to distinguish one component from another component, and unless expressly stated to the contrary, it is obvious that the first component may be the second component.

Throughout the specification, unless expressly stated to the contrary, each component may be singular or plural.

Hereinafter, when any configuration is disposed on the "upper (or lower)" of a component or "top (or bottom)" of a component, it may mean not only that any configuration is disposed in contact with the upper surface (or lower surface) of the component, but also that other configuration may be interposed between the component and any configuration disposed above (or below) the component.

Additionally, when it is described that a component is "connected", "coupled", or "in contact" to another component, the components may be directly connected to or in contact with each other, but it should be understood that other components may be "interposed" between each component, or each component may be "connected", "coupled", or "in contact" through another component.

As used herein, singular expressions include plural expressions unless the context clearly indicates otherwise. In this application, the terms "comprising" or "including" should not be construed as necessarily including all of the various components or various steps described in the specification, but rather should be construed as not including some of the components or some of the steps, or as further including additional components or steps.

Throughout the specification, when referring to "A and/or B", it means A, B or A and B, unless expressly stated to the contrary, and when referring to "C to D", it means C or more and D or less, unless expressly stated to the contrary.

In describing the embodiments, the term axial direction refers to a direction in which an axis forming a winding center of the jelly-roll type electrode assembly extends, the term radial direction refers to a direction approaching to (centripetal) or moving away from (centrifugal) the axis, and the term circumferential (circumference) direction refers to a direction surrounding the axis.

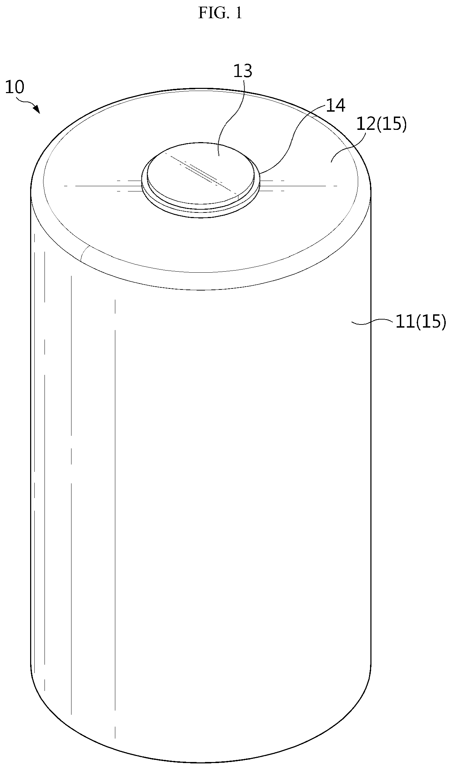

Hereinafter, with reference to FIGS. 1 to 12, an embodiment of a battery cell to which a welding structure of the present disclosure is applied will be described in detail.

The battery cell of the embodiment may be, for example, a cylindrical battery cell having a form factor ratio (defined as a value obtained by dividing a diameter of the cylindrical battery cell by a height, that is, a ratio of the diameter Φ to the height H) greater than approximately 0.4.

Here, the form factor refers to a value representing the diameter and height of the cylindrical battery cell. The cylindrical battery cell may be, for example, a 46110 cell, a 48750 cell, a 48110 cell, a 48800 cell, or a 46800 cell. In the numerical value indicating the form factor, the first two numbers indicate the diameter of the cell, the next two numbers indicate the height of the cell, and the last number 0 indicates that the cross-section of the cell is circular.

The battery cell may be a cylindrical battery cell having an approximately cylindrical shape with a diameter of approximately 46 mm, a height of approximately 110 mm, and a form factor ratio of 0.418.

A battery cell according to another embodiment may be a cylindrical battery cell having an approximately cylindrical shape with a diameter of approximately 48 mm, a height of approximately 75 mm, and a form factor ratio of 0.640.

A battery cell according to still another embodiment may be a cylindrical battery cell having an approximately cylindrical shape with a diameter of approximately 48 mm, a height of approximately 110 mm, and a form factor ratio of 0.418.

A battery cell according to still another embodiment may be a cylindrical battery cell having a substantially cylindrical shape with a diameter of approximately 48 mm, a height of approximately 80 mm, and a form factor ratio of 0.600.

A battery cell according to still another embodiment may be a cylindrical battery cell having a substantially cylindrical shape with a diameter of approximately 46 mm, a height of approximately 80 mm, and a form factor ratio of 0.575.

It should be noted that the present disclosure may also be applied to battery cells having a form factor ratio of approximately 0.4 or less, such as an 18650 cell, a 21700 cell, and the like. In the case of an 18650 cell, the diameter is approximately 18 mm, the height is approximately 65 mm, and the form factor ratio is 0.277. In the case of a 21700 cell, the diameter is approximately 21 mm, the height is approximately 70 mm, and the form factor ratio is 0.300.

The battery cell of the embodiment includes an electrode assembly 20, current collector plates 31, 32 electrically connected to the electrode assembly 20, and a can 10 that accommodates the electrode assembly 20 and the current collector plates 31, 32.

The can 10 may be configured such that the electrode assembly 20 is accommodated therein and an open part is formed. The can 10 includes a side wall member 11 that extends axially between a first end and a second end, and a bottom member 12 that is connected to the first end of the side wall member 11 and extends radially. The axial second end of the bottom member 12 is open.

That is, the side wall member 11 may extend in the axial direction, the first end in the axial direction may be connected to the bottom member 12, and the open part may be formed in the second end in the axial direction opposite to the first end.

The open end of the side wall member 11 is sealed by covering it with a cap 40 after accommodating the electrode assembly 20 in the can 10.

The bottom member 12 may have a disk shape with a hole formed in the center, and the side wall member 11 may have a circular tubular shape.

The bottom member 12 and the side wall member 11 may be manufactured by molding a metal sheet with nickel plating on the surface of steel by a deep drawing process, and trimming the front end of the side wall member 11 with a punch while gripping it with a blank holder. Of course, the material of the can 10 is not limited thereto.

A first electrode terminal 13 may be fitted into the hole. The first electrode terminal 13 may be riveted and fixed to the bottom member 12 with a gasket 14 interposed therebetween. The gasket 14 may be interposed between the first electrode terminal 13 and the bottom member 12 to seal the inside and outside of the can 10 to prevent leakage of an electrolyte, and to electrically insulate the first electrode terminal 13 from the bottom member 12.

However, the connection method between the first electrode terminal 13 and the bottom member 12 is not limited thereto. For example, as long as the structure is capable of providing sealing between the first electrode terminal 13 and the bottom member 12 and electrically insulating the first electrode terminal 13 from the bottom member 12, various other fixing methods, such as a bolt-nut coupling method, a glass seal method, or a chrome coating & PP-MAH thermal bonding method, may also be applied.

The first electrode terminal 13 may have a first polarity, and the can 10 may have a second polarity. That is, the bottom member 12 of the can 10, the side wall member 11 connected thereto, and the cap 40 connected to the side wall member 11, which will be described later, may all have a second polarity.

Accordingly, the battery cell may have both the first electrode terminal 13 and the second electrode terminal 15 disposed at the axial end, that is, the closed end, provided with the bottom member 12. Then, the battery cell may have both a busbar connected to the first electrode terminal 13 and a busbar connected to the second electrode terminal 15 positioned at the top of the battery cell.

In one example, the first electrode terminal 13 may be a positive electrode terminal, and the second electrode terminal 15 may be a negative electrode terminal. Of course, the opposite may also be true.

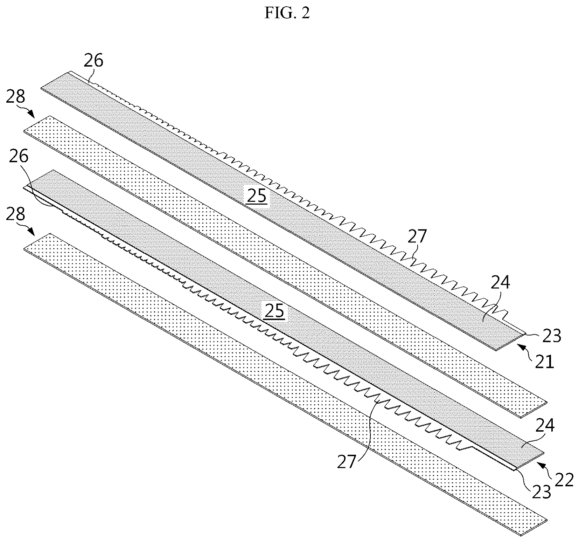

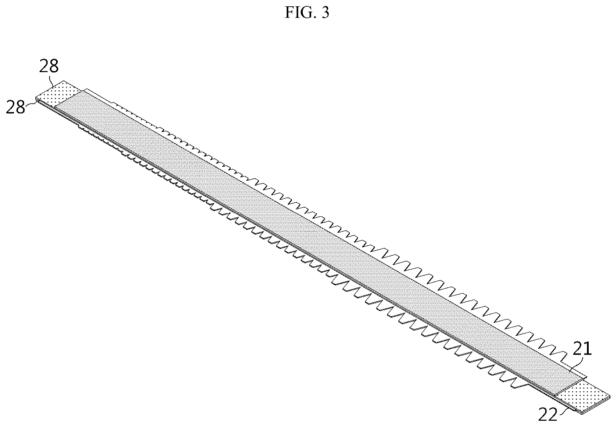

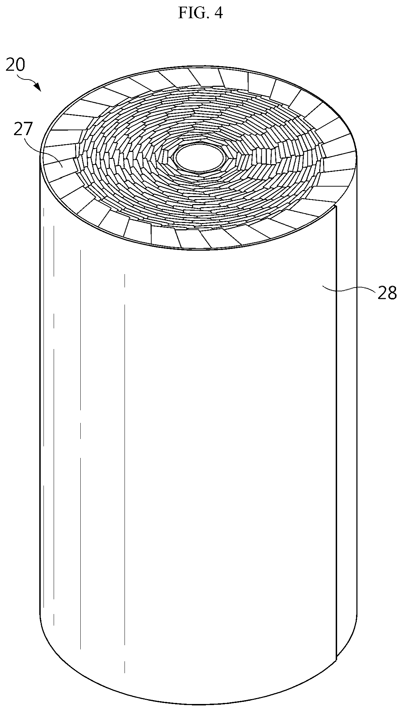

An electrode assembly 20 is accommodated within the can 10. The electrode assembly 20 is manufactured in the cylindrical form of a jelly-roll by preparing a first electrode 21, a second electrode 22, and a separator 28 that extend in the longitudinal direction with a predetermined width as shown in FIG. 2, and forming a stack by sequentially stacking the first electrode 21, the separator 28, the second electrode 22, and the separator 28 as shown in FIG. 3, and then winding the stack around a core axis as shown in FIG. 4.

The first electrode 21 may be a positive electrode, and the second electrode 22 may be a negative electrode. Of course, the opposite may also be true.

The first electrode 21 and the second electrode 22 are manufactured in the form of sheets. The electrode sheet is manufactured in the form of an active material layer 24 being applied to the surface of a metal foil 23. The electrode sheet has a coated portion 25 where an active material layer 24 is applied, and an uncoated portion 26 where an active material layer 24 is not applied. The positive electrode sheet has an uncoated portion 26 on one side in the width direction, and the negative electrode sheet has an uncoated portion 26 on the other side in the width direction.

The uncoated portion 26 is exposed or protrudes from the stack in the width direction. The uncoated portion 26 itself functions as an electrode tab 27.

The uncoated portion 26 may be notched at predetermined intervals to form notching tabs 27 in the shape of flags.

In the embodiment, it is illustrated that the notching tabs 27 have an equilateral trapezoidal shape. However, their shapes may be various shapes such as a semicircle, a semi-ellipse, a triangle, a rectangle, a parallelogram, and the like.

Additionally, the embodiment shows that the notching tabs 27 arranged along the longitudinal direction have the same width. However, the width of the notching tabs may increase gradually or stepwise from the core side to the outer circumferential side.

Additionally, the embodiment shows that the height of the notching tabs 27 increases stepwise from the core side to the outer circumferential side. However, the height of these notching tabs may be implemented in a constant or gradually decreasing form.

Additionally, the embodiment shows a structure in which the notching tabs 27 are deleted in a predetermined section of the central end of the uncoated portion 26 and a predetermined section of the centrifugal end of the uncoated portion 26. However, it is obvious that the notching tabs may not be deleted at the central end of the uncoated portion, and the notching tabs may not be deleted at the centrifugal end of the uncoated portion.

In the jelly-roll type electrode assembly 20, the notching tab 27 may be bent radially to be flattened as shown in FIG. 4. The notching tab 27 may be bent radially inward or outward. The embodiment shows a structure in which the notching tab 27 is bent radially inward.

The notching tab 27 may be bent one by one during the process of forming a jelly-roll type electrode assembly 20 by winding the stack. Alternatively, the notching tab 27 may be bent all at once after the stack is wound to form a jelly-roll type electrode assembly.

The notching tabs 27 of the first electrode 21 and the notching tabs 27 of the second electrode 22 that are bent radially and overlapped in this way may each provide a plane substantially perpendicular to the axial direction at both axial ends of the electrode assembly 20.

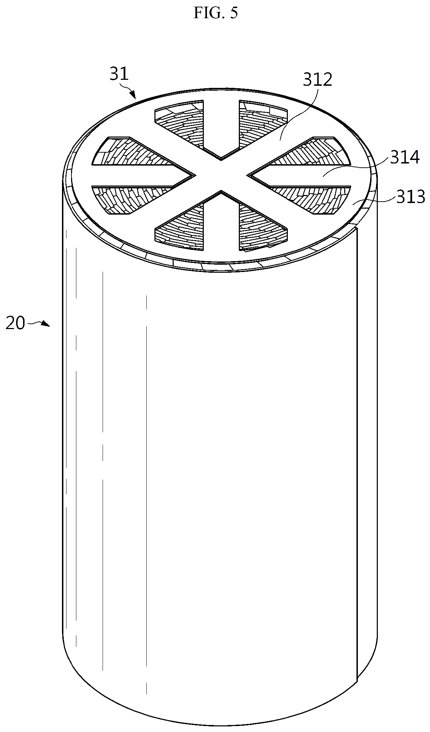

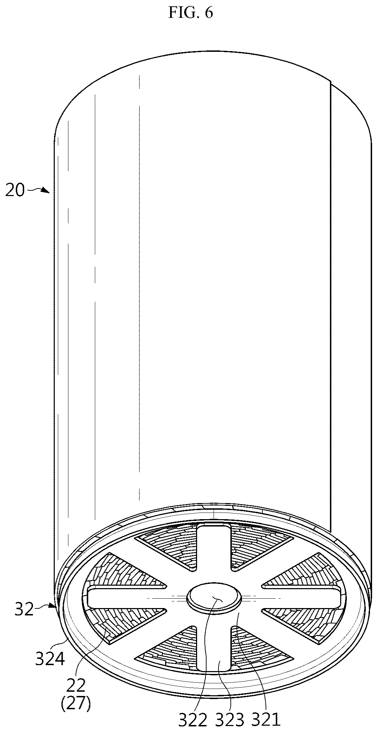

A first current collector plate 31 and a second current collector plate 32 may each be bonded to the substantially flat surface provided by bending the notching tab 27 exposed at both axial ends of the electrode assembly 20 as shown in FIGS. 5 and 6.

The current collector plates 31, 32 may be connected to the electrode assembly 20. Here, the current collector plates 31, 32 may include electrode connection portions 314, 323 connected to the electrodes of the electrode assembly 20 and terminal connection portions 312, 324 connected to the side wall member 11.

In the embodiment, the first current collector plate 31 is a positive electrode current collector plate and the second current collector plate 32 is a negative electrode current collector plate. The first current collector plate 31 may be made of aluminum and the second current collector plate 32 may be made of copper.

The current collector plates 31, 32 may be manufactured by punching, trimming, piercing, and bending a metal sheet.

Referring to FIG. 5, the first current collector plate 31 has a first terminal connection portion 312 extending radially from the center, a ring portion 313 connecting the centrifugal edge of the first terminal connection portion 312 in a circumferential direction, and a first electrode connection portion 314 that extends centripetally from the ring portion 313 and is not connected to the first terminal connection portion 312. The center of the first terminal connection portion 312 covers at least a portion of the core hollow portion of the electrode assembly 20.

The first electrode connection portion 314 is bonded to the notching tab 27 of the first electrode 21 of the electrode assembly 20 by laser welding or the like prior to placing the electrode assembly 20 in the can 10. The welding line of the laser may extend radially.

Referring to FIG. 6, the second current collector plate 32 includes an inner ring portion 321 that defines a hole 322 corresponding to the core hollow portion of the electrode assembly 20 and is provided in a form surrounding the core hollow portion, a second electrode connection portion 323 extending radially from the inner ring portion 321, and a second terminal connection portion 324 that is disposed on the centrifugal side than the second electrode connection portion 323 and is connected to the inner ring portion 321. The second terminal connection portion 324 has the form of an outer ring surrounding the edge of the second current collector plate 32.

The second electrode connection portion 323 may be bonded to the notching tab 27 of the second electrode 22 of the electrode assembly 20 by laser welding or the like prior to placing the electrode assembly 20 in the can 10. The welding line of the laser may extend radially.

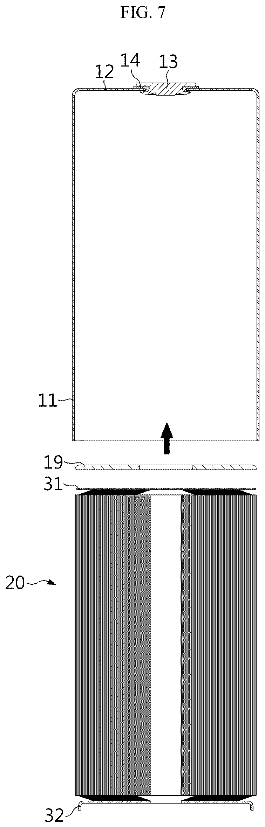

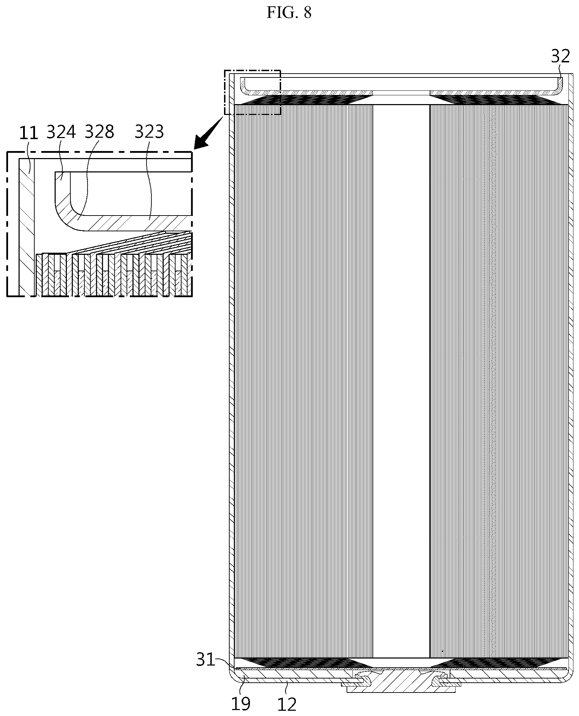

As shown in FIGS. 7 and 8, the electrode assembly 20 is accommodated in the can 10 in a state where the first current collector plate 31 is aligned toward the bottom member 12 of the can 10. At this time, an insulator 19 is interposed between the first current collector plate 31 and the bottom member 12 of the can 10 to electrically insulate the first current collector plate 31 from the bottom member 12.

In a state where the electrode assembly 20 is accommodated inside the can 10, the electrode tab 27 of the second electrode 22 and the second current collector plate 32 are disposed to face the open end of the side wall member 11.

The outer diameter of the second terminal connection portion 324 of the second current collector plate 32 is slightly smaller than the inner diameter of the side wall member 11, so that a gap may exist in the radial direction.

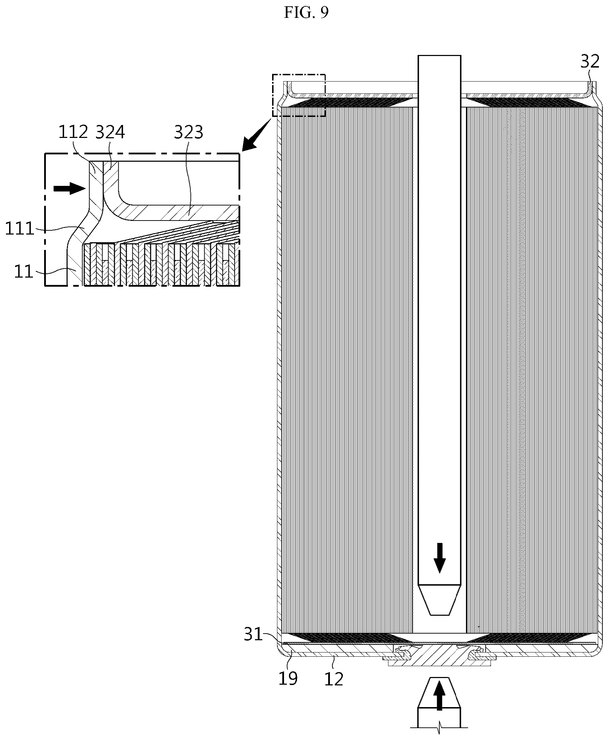

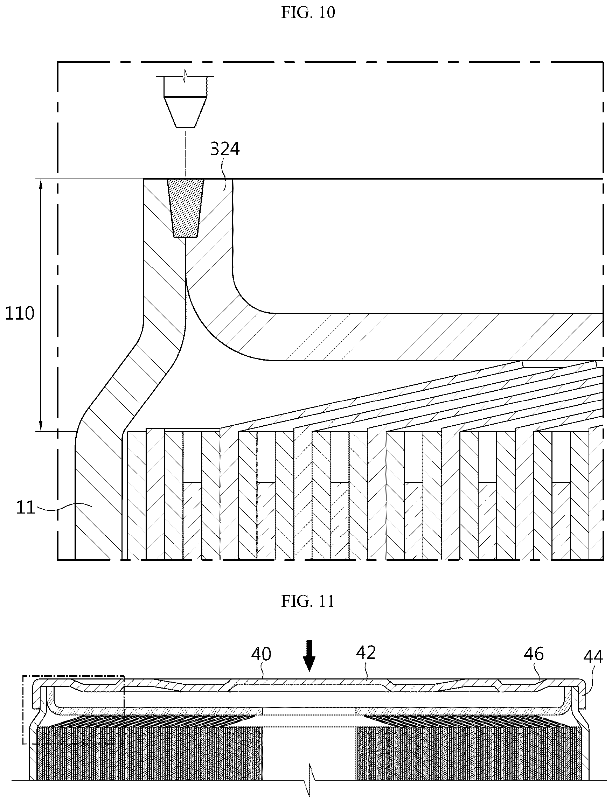

Referring to FIGS. 9 and 10, the open end of the side wall member 11 is swaged to reduce its diameter. Accordingly, a diameter reduction portion 110 in which both the outer diameter and the inner diameter before processing are reduced is formed at the open end of the side wall member 11. That is, the diameter reduction portion 110 in which both the first outer diameter and the first inner diameter of the side wall member 11 are reduced may be provided at the second end of the side wall member 11. Here, the skirt portion 44 is disposed on an outer side of the diameter reduction portion 110, and the skirt portion 44 and the diameter reduction portion 110 may be bonded.

The diameter reduction portion 110 includes a decreasing section 111 whose diameter gradually decreases toward an axial outer side, and a reduction section 112 disposed on the axial outer side of the decreasing section 111 and having a constant diameter.

By the swaging process, the diameter reduction portion 110 of the side wall member 11 is in close contact with the outer circumferential surface of the second terminal connection portion 324 in the radial direction. At this time, if the swaging process is performed in a state where the first current collector plate 31 and the first electrode terminal 13 are not bonded, the electrode assembly 20 is allowed to move slightly in the radial direction inside the can 10.

Therefore, even if the second current collector plate 32 of the electrode assembly 20 inserted into the can 10 was not concentrically aligned with the center of the can 10 before the swaging process, the concentric alignment thereof may be made by the swaging process. Likewise, even if there is an assembly error between the electrode assembly 20 and the second current collector plate 32, the above concentric alignment is possible, and even if there is a manufacturing tolerance of the second current collector plate 32, the above concentric alignment is possible.

The second terminal connection portion 324 may extend axially from the radial outer edge of the second current collector plate 32. As such, if the second terminal connection portion 324 extends in the axial direction, the contact area of the second terminal connection portion 324 and the side wall member 11 may be sufficiently secured.

The second terminal connection portion 324 may extend axially outward from a bending portion 328 provided on the radial outer edge of the second current collector plate 32.

In the axial direction, at least a portion of the inner circumferential surface of the diameter reduction portion 110 is in close contact with at least a portion of the outer circumferential surface of the second terminal connection portion 324. In an embodiment, some or all of the axial portion of the reduction section 112 of the diameter reduction portion 110 is in contact with some or all of the axial portion of the second terminal connection portion 324 in the radial direction.

Preferably, the second terminal connection portion 324 is in close contact with the diameter reduction portion 110 in the entire circumferential direction. In an embodiment, the entire circumferential section of the outer circumferential surface of the second terminal connection portion 324 is in close contact with the entire circumferential section of the inner circumferential surface of the reduction section 112 of the diameter reduction portion 110.

Accordingly, the adhesion for welding the second current collector plate 32 and the side wall member 11 may be further secured. Additionally, a substantial amount of heat generated during the welding process of the can 10 and the cap 40 to be described later may be quickly dispersed through the second current collector plate 32, thereby minimizing the impact of the welding heat on the electrode assembly 20.

In particular, since the second electrode connection portion 323 is connected to the second terminal connection portion 324 via the inner ring portion 321, a long heat transfer path is formed from the second terminal connection portion 324 to the second electrode connection portion 323 bonded to the electrode assembly 20, so that high temperature heat is not transferred to the electrode assembly 20.

The inner diameter of the axial second end of the side wall member 11 in which the diameter reduction portion 110 is provided may correspond to or be larger than the outer diameter of the axial outer end of the second terminal connection portion 324. Accordingly, the side wall member 11 does not cover the axial outer end surface of the second terminal connection portion 324 in the axial direction, so that the laser irradiated in the axial direction may reach the diameter reduction portion 110 and the second terminal connection portion 324 without any difficulty.

The axial inner end of the diameter reduction portion 110 may be disposed axially further outward than the axial outer end of the outer circumferential surface of the electrode assembly 20.

Preferably, the inner diameter of at least a portion of the diameter reduction portion 110 may be smaller than the diameter of the outer circumferential surface of the electrode assembly 20. Then, the diameter reduction portion 110 may axially support the electrode assembly 20 accommodated inside the can 10.

The axial positions of the axial outer end of the diameter reduction portion 110 and the axial outer end of the second terminal connection portion 324 may correspond to each other. The corresponding portion may be in contact with the axial inner surface of the cap 40 in the process of coupling the cap 40 to be described later to the can 10, and accordingly, the insertion depth of the cap 40 to be described later may be regulated.

After the swaging process, the first terminal connection portion 312 of the first current collector plate 31 is bonded to the first electrode terminal 13 fixed to the can 10 by means of resistance welding, ultrasonic welding, laser welding, or the like. A welding device for welding the first current collector plate 31 and the first electrode terminal 13 may approach the back surface of the center of the first terminal connection portion 312 of the first current collector plate 31 through the open part of the can 10, the hole 322 of the second current collector plate 32, and the core hollow portion of the electrode assembly 20 to perform welding. Of course, in addition to this, the first current collector plate 31 and the first electrode terminal 13 may also be bonded by means of brazing, soldering, or the like. That is, the first current collector plate 31 and the first electrode terminal 13 may be coupled to each other in various ways as long as they may be electrically connected and fixed to each other.

However, the present disclosure does not exclude a structure in which the positive electrode tab is directly electrically connected to the positive electrode terminal in a state where the positive electrode current collector plate is omitted.

The embodiment proposes that the first terminal connection portion 312 of the first current collector plate 31 is welded after the swaging process, but it is not necessary to follow this sequence.

After the swaging process, the second terminal connection portion 324 and the diameter reduction portion 110 are welded together by a laser irradiated from the axial outer side of the can toward the axial inner side. Preferably, the axial outer end of the outer circumferential surface of the second terminal connection portion 324 is welded to the axial outer end of the inner circumferential surface of the diameter reduction portion 110.

The welding part may be covered and protected by a cap 40. Here, the cap 40 may be configured to cover the open part of the can 10. The cap 40 may be bonded to various parts of the can 10, for example, the cap 40 may be bonded on the outer side of the can 1.

And, the cap 40 may include a cover portion 42 covering the open part of the second end and a skirt portion 44 extending in the axial direction from an edge of the cover portion 42.

After the bonding of the first current collector plate 31 and the first electrode terminal 13 and the bonding of the second current collector plate 32 and the side wall member 11, the electrolyte may be injected into the can 10. Since the cross-sectional area of the open part of the can 10 is very large, the electrolyte injection process may be easily and smoothly performed compared to when the electrolyte is injected through a separate injection port.

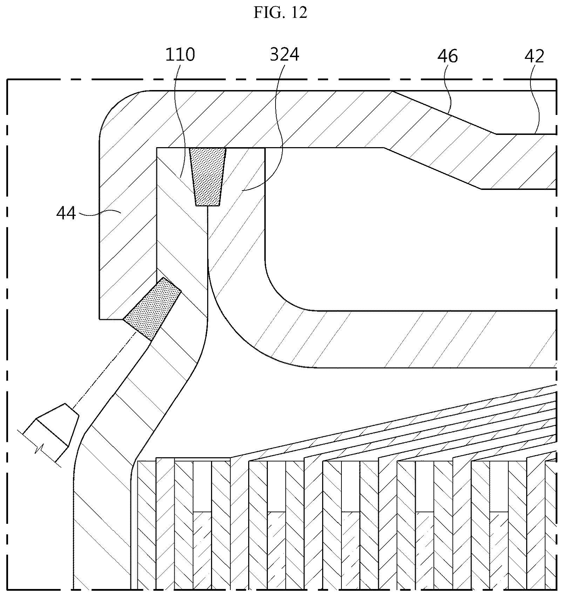

After the electrolyte is injected, as shown in FIGS. 11 and 12, the open part of the side wall member 11 is covered with the cap 40 to be closed.

The cap 40 has a cover portion 42 covering the open part and a skirt portion 44 extending in the axial direction from an edge of the cover portion 42.

The cover portion 42 may have a substantially disc shape extending in the radial direction. The surface of the cover portion 42 becomes a surface in contact with the floor when the battery cell is erected.

Preferably, the cover portion 42 may have a plurality of concentric inclined portions 46. The inclined portions 46 may increase the bending rigidity of the cover portion 42 and may smoothly induce fine dimensional adjustment of the cap 40 in the sizing process.

The skirt portion 44 extends axially inward from the cover portion 42.

In a state where the open part of the can 10 is covered with the cap 40, the skirt portion 44 is disposed on the radial outer side of the diameter reduction portion 110.

Preferably, at least a portion of the axial section of the inner circumferential surface of the skirt portion 44 may be in close contact with at least a portion of the axial section of the outer circumferential surface of the diameter reduction portion 110. Specifically, the outer circumferential surface of the reduction section 112 of the diameter reduction portion 110 may provide the close contact area.

Since the skirt portion 44 extends in the axial direction, the contact area of the diameter reduction portion 110 and the skirt portion 44 may be sufficiently secured.

The skirt portion 44 may be disposed within the axial section occupied by the diameter reduction portion 110. Specifically, it may be disposed within the axial section occupied by the reduction section 112. The skirt portion 44 may cover some or all of the reduction section 112 in the axial direction. Accordingly, the skirt portion 44 may prevent the outer diameter of the battery cell from increasing.

Preferably, the outer diameter of the skirt portion 44 may substantially correspond to the outer diameter of the side wall member 11 that has not been reduced by the swaging process.

The skirt portion 44 and the diameter reduction portion 110 are welded together by a laser irradiated from the radial outer side of the can toward the radial inner side. Accordingly, the skirt portion 44 is welded to the outer circumferential surface of the diameter reduction portion 110, and this welding part is a part that is difficult for the electrolyte to reach in the process of injecting the electrolyte into the internal space of the can.

Preferably, the axial inner end of the inner circumferential surface of the skirt portion 44 is seam welded to the outer circumferential surface of the diameter reduction portion 110 to be sealed. Accordingly, the welding part does not protrude radially further outward than the side wall member 11 and does not protrude axially further outward than the cover portion 42 of the cap 40.

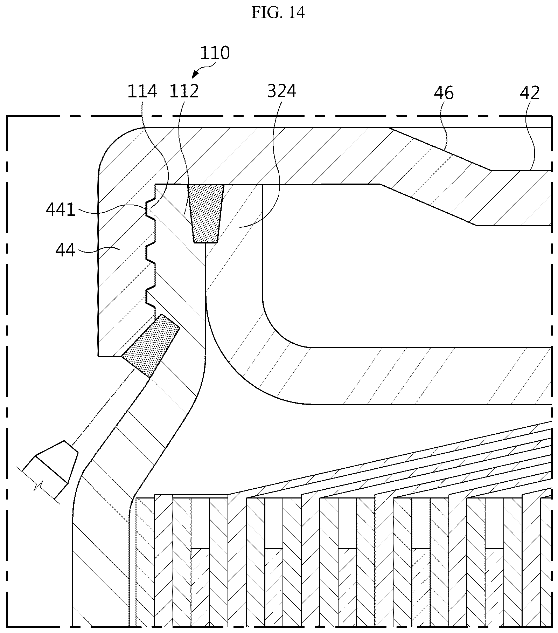

FIG. 14 is a view illustrating a modified embodiment of FIG. 12. Referring to FIG. 14, a coupling protrusion 114 may be formed in the reduction section 112 of the diameter reduction portion 110, a coupling groove 441 may be formed in the skirt portion 44, and the coupling protrusion 114 in the reduction section 112 may be coupled to the coupling groove 441 in the skirt portion to improve coupling force.

In FIG. 14, the coupling protrusion 114 has a trapezoidal shape, but the shape of the coupling protrusion 114 is not limited thereto, and the shape of the coupling protrusion 114 may be more diverse. For example, the shape of the coupling protrusion 114 may be a polygon including a square and a triangle, a circle, an oval, or the like, and may be formed in various other shapes.

Additionally, although not shown in the drawing, as a modified embodiment of FIG. 14, a coupling groove may be formed in the reduction section 112 of the diameter reduction portion 110, a coupling protrusion may be formed in the skirt portion 44, and the coupling protrusion of the skirt portion 44 may be configured to be coupled to the coupling groove of the reduction section 112.

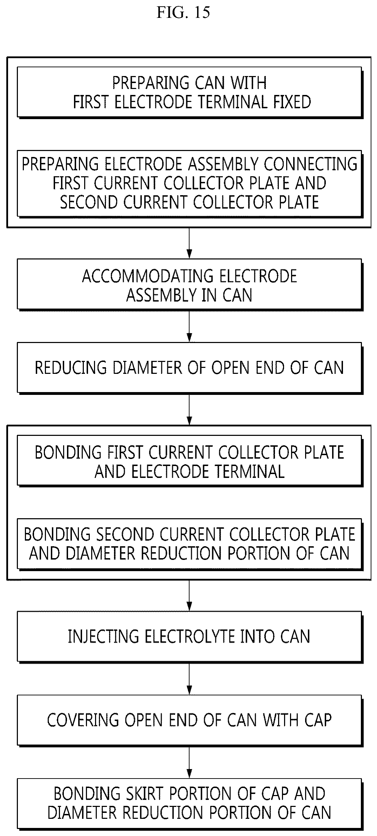

Hereinafter, an embodiment of a method for manufacturing a battery cell according to the present disclosure will be described with reference to FIG. 15.

First, a battery can 10 is prepared. In order to prepare the battery can 10, a first electrode terminal 13 is fixed to a hole provided in the bottom member 12 of the can 10. At this time, a gasket 14 is interposed between the bottom member 12 and the electrode terminal 13 to ensure electrical insulation and sealing between them. The embodiment exemplifies a form in which the gasket 14 is interposed and the first electrode terminal 13 is fixed by riveting, but it is obvious that various other known methods capable of fixing the first electrode terminal 13 to the bottom member 12 while performing insulation sealing may be applied.

Additionally, an electrode assembly 20 in which current collector plates 31, 32 are welded to both ends is prepared.

The electrode assembly 20 is inserted into the can 10 thus prepared. Then, the first current collector plate 31 faces and contacts the first electrode terminal 13, and the second electrode connection portion 323 of the second current collector plate 32 faces the open end.

In this state, a predetermined axial section of the open end of the side wall member 11 of the can 10 is swaged radially inward. Accordingly, a diameter reduction portion 110 is formed in the side wall member 11. At this time, the adhesion between the inner circumferential surface of the diameter reduction portion 110 and the outer circumferential surface of the second terminal connection portion 324 of the second current collector plate 32 may be adjusted by adjusting the degree of processing of the swaging.

As the swaging process proceeds, the can 10 and the second current collector plate 32 may be concentrically aligned.

Next, the first current collector plate 31 and the first electrode terminal 13 are welded together, and a laser is irradiated to the axial outer end of the area where the diameter reduction portion 110 and the second terminal connection portion 324 face and contact each other to weld them together.

Next, an electrolyte is injected into the can through the open part of the can 10.

After the electrolyte is injected, the open part of the can 10 is covered with the cap 40 so that the skirt portion 44 is disposed on the radial outer side of the diameter reduction portion 110.

Then, the skirt portion 44 and the diameter reduction portion 110 are welded together.

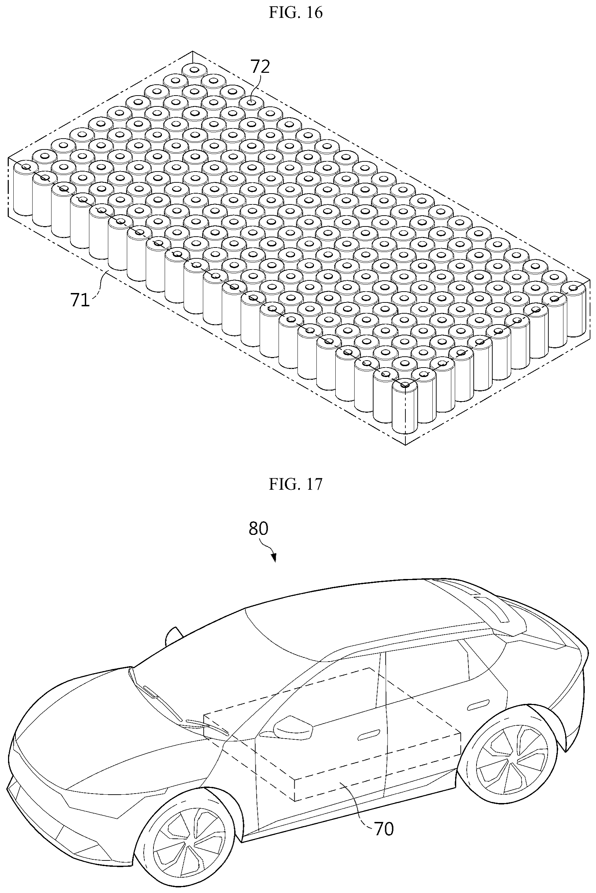

The battery cell 72 manufactured through the welding structure and welding process described above may be accommodated in the housing 71 of the battery pack 70, as shown in FIG. 16. The battery pack 70 may be configured using a battery module that is an intermediate form of assembly, or the battery pack 70 may be configured directly without the battery module as shown.

Since the battery cell 72 described above itself has a large volume, there is no particular difficulty in implementing the battery pack 70 even without using an intermediate structure called a battery module. And, the battery cell 72 has low internal resistance and higher energy density. Accordingly, the energy density of the battery pack 70 including the battery cell 72 may be implemented even higher.

The battery pack 70 with the increased energy density in this way may store the same energy while reducing the volume and load thereof. Therefore, if the battery pack 70 to which these battery cells 72 are applied is mounted on a vehicle such as the vehicle 80 using electricity as an energy source as shown in FIG. 17, the mileage of the vehicle per unit of energy may be further expanded.

It should be understood that the above-described embodiments are exemplary and not limiting in all respects, and the scope of the present disclosure will be indicated by the claims to be described later rather than the detailed description described above. And, the meaning and scope of the claims to be described later, as well as all changes and modifications derived from the equivalent concepts, should be interpreted as being included in the scope of the present disclosure.

The present disclosure has been described hereinabove with reference to the illustrated drawings, but it is apparent that the present disclosure is not limited by the embodiments and drawings disclosed in this specification and various modifications may be made by those skilled in the art within the scope of the technical ideas of the present disclosure. In addition, even if the effects according to the configuration of the present disclosure have not been explicitly described in the foregoing description of the embodiments of the present disclosure, it is obvious that the effects to be predicted by the corresponding configuration should also be recognized.

### INDUSTRIAL APPLICABILITY

The present disclosure relates to a battery cell and a method for manufacturing the same, and is particularly applicable to industries related to secondary batteries.

## Claims

1. A battery cell comprising:
an electrode assembly comprising a first electrode, a second electrode, and a separator;
a can having an open part formed therein and accommodating the electrode assembly;
a current collector plate connected to the electrode assembly; and
a cap covering the open part of the can,
wherein the cap is bonded at an outer side of the can.

2. The battery cell according to claim 1,
wherein the can comprises:
a bottom member; and
a side wall member that extends in an axial direction, has a first end in the axial direction connected to the bottom member, and has the open part formed at a second end in the axial direction opposite to the first end.

3. The battery cell according to claim 2,
wherein the current collector plate comprises:
an electrode connection portion connected to electrodes of the electrode assembly; and
a terminal connection portion connected to the side wall member.

4. The battery cell according to claim 3,
wherein the cap comprises:
a cover portion covering the open part of the second end; and
a skirt portion extending in the axial direction from an edge of the cover portion.

5. The battery cell according to claim 4,
wherein a diameter reduction portion in which both a first outer diameter and a first inner diameter of the side wall member are reduced is provided in the second end of the side wall member,
wherein the skirt portion is disposed on an outer side of the diameter reduction portion, and
the skirt portion and the diameter reduction portion are bonded.

6. The battery cell according to claim 5,
wherein the skirt portion and the diameter reduction portion are welded.

7. The battery cell according to claim 5,
wherein in the axial direction, at least a portion of an inner circumferential surface of the skirt portion is in close contact with at least a portion of an outer circumferential surface of the diameter reduction portion.

8. The battery cell according to claim 5,
wherein an axial inner end of the inner circumferential surface of the skirt portion is bonded to the outer circumferential surface of the diameter reduction portion.

9. The battery cell according to claim 3,
wherein the terminal connection portion extends axially from a radial outer edge of the current collector plate.

10. The battery cell according to claim 3,
wherein the terminal connection portion extends axially outward from a bending portion provided on the radial outer edge of the current collector plate.

11. The battery cell according to claim 5,
wherein the terminal connection portion and the diameter reduction portion are bonded.

12. The battery cell according to claim 5,
wherein the terminal connection portion and the diameter reduction portion are welded.

13. The battery cell according to claim 5,
wherein in the axial direction, at least a portion of an inner circumferential surface of the diameter reduction portion is in close contact with at least a portion of an outer circumferential surface of the terminal connection portion.

14. The battery cell according to claim 5,
wherein an axial outer end of the outer circumferential surface of the terminal connection portion is bonded to an axial outer end of the inner circumferential surface of the diameter reduction portion.

15. The battery cell according to claim 13,
wherein the terminal connection portion is in close contact with the diameter reduction portion in the entire circumferential direction.

16. The battery cell according to claim 5,
wherein the diameter reduction portion comprises a decreasing section whose diameter gradually decreases toward an axial outer side, and a reduction section disposed on an axial outer side of the decreasing section and having a constant diameter.

17. The battery cell according to claim 16,
wherein a coupling protrusion is formed in the reduction section, a coupling groove is formed in the skirt portion, and the coupling protrusion in the reduction section is coupled to the coupling groove in the skirt portion.

18. The battery cell according to claim 16,
wherein a coupling groove is formed in the reduction section, a coupling protrusion is formed in the skirt portion, and the coupling protrusion in the skirt portion is coupled to the coupling groove in the reduction section.

19. The battery cell according to claim 5,
wherein in the axial direction, the inner end of the diameter reduction portion is disposed further outward than an outer end of an outer circumferential surface of the electrode assembly.

20. The battery cell according to claim 5,
wherein in the axial direction, a second inner diameter of at least a portion of the diameter reduction portion is smaller than an outer diameter of the electrode assembly.

21. The battery cell according to claim 4,
wherein an outer diameter of the skirt portion substantially corresponds to a first outer diameter of the side wall member.

22. A method for manufacturing a battery cell according to any one of claims 1 to 21, the method comprising:
a step of forming a diameter reduction portion by swaging a second end of a side wall member of a can accommodating an electrode assembly radially inward;
a step of bonding the diameter reduction portion and a terminal connection portion;
a step of injecting an electrolyte into the can through an open part of the can after bonding the diameter reduction portion and the terminal connection portion;
a step of covering the open part of the can with a cap so that a skirt portion is disposed radially outward from the diameter reduction portion after injecting the electrolyte; and
a step of bonding the skirt portion and the diameter reduction portion.

23. The method for manufacturing a battery cell according to claim 22,
wherein the adhesion between the inner circumferential surface of the diameter reduction portion and the outer circumferential surface of the terminal connection portion is adjusted by adjusting the degree of processing of the swaging in the step of forming the diameter reduction portion.

24. The method for manufacturing a battery cell according to claim 22,
wherein the can has an electrode terminal, and after the diameter reduction portion is formed and before the electrolyte is injected, a heterogeneous electrode of the electrode assembly having a different polarity from the electrode is connected to the electrode terminal.
